# EUROPÄISCHE PATENTSCHRIFT

(11) **EP 4 480 864 B1**
(45) Veröffentlichungstag und Bekanntmachung des Hinweises auf die Patenterteilung: **01.04.2026**
(21) Anmeldenummer: 24183075.1
(22) Anmeldetag: 19.06.2024
(51) Int. Cl.: B65G 47/22, B65G 57/18

(54) **VORRICHTUNG ZUM GLEICHRICHTEN LÄNGLICHER GEGENSTÄNDE**
DEVICE FOR RECTIFYING ELONGATED OBJECTS
DISPOSITIF POUR REDRESSER DES OBJETS ALLONGÉS

(30) Priorität: 20.06.2023 AT 504832023
(43) Veröffentlichungstag der Anmeldung: 25.12.2024
(73) Patentinhaber: TEAM CONSTRUCT Maschinenbau Gesellschaft m.b.H., 9300 St. Veit an der Glan (AT)
(72) Erfinder: SPENDIER, Peter, 9300 Sankt Veit an der Glan (AT)
(74) Vertreter: Beer & Partner Patentanwälte KG

(56) Entgegenhaltungen:
- EP-A1- 3 536 641
- CN-A- 109 353 785
- DE-A1- 2 544 155

## Beschreibung

Die Erfindung betrifft eine Vorrichtung zum Gleichrichten länglicher, übereinanderliegender Gegenstände, wie Schnittholz, insbesondere Latten aus Holz.

In einer Anlage zum Bilden von Stapeln aus stabförmigen Gegenständen, wie Schnittholz, insbesondere Latten aus Holz, die aus AT 523 386 B1 bekannt sind, werden die zu stapelnden Gegenstände in ein Magazin in Form eines Schachtes eingebracht. Die danach gebildeten Stapel aus stabförmigen Gegenständen werden von Lattengreifern aus dem Magazin entnommen.

Aus der DE 20 2019 101 740 U1 ist eine Anlage zum Magazinieren von Trennleisten bekannt, mit der Trennleisten, die alle die gleiche Länge aufweisen, an einer Anschlagfläche gleichgerichtet und mit einem Roboter in ein Magazin gegeben werden.

Aus der DE 25 44 155 A1 ist eine gattungsgemäße Vorrichtung zum Umlegen von Holzbrettern von einem Stapel auf einen anderen Stapel bekannt, die eine verstellbare Zahnleiste mit Einzelzähnen und dieser gegenüberliegend weitere Zähne aufweist. Die Zahnleiste, Einzelzähne und gegenüberliegenden Zähne sind mittels Druckzylindern verstellbar.

Die JP 2008-179462 A offenbart verschiebbare, vertikale Leisten, die jeweils auf gegenüberliegenden Seiten auszurichtender Gegenstände angeordnet sind.

Latten aus Holz, die in Lattenmagazinen bereitgestellt werden, werden auf Lagen aus Schnittholz gelegt. Die Latten werden den Lattenmagazinen von oben her zugeführt und unten aus den Lattenmagazinen entnommen, um sie an den vorgesehenen Stellen auf Lagen aus Schnittholz abzulegen.

Bekannt sind auch Holzsortieranlagen (Paketieranlagen), in denen Schnittholz und dgl. durch Ablegen in Boxen, Etagen, Fächer und dgl. sortiert und dann zu Paketen zusammengelegt werden.

Problematisch bei von unten zu befüllenden Magazinen ebenso wie bei den von oben her zu befüllenden Magazinen ist es, dass die länglichen Gegenstände, wie Schnittholz oder Latten, aufgrund der unvermeidlichen Vibrationen und Ungenauigkeiten beim Zuführen und Entnehmen in den Lattenmagazinen so zu liegen kommen, dass die Enden der länglichen Gegenstände, wie Latten, auf keiner Seite in einer Ebene liegen. Das ist unerwünscht und setzt voraus, dass eine Bedienungsperson die in dem Magazin enthaltenen Gegenstände (Latten) so verschiebt, dass auf einer Seite die Enden der länglichen Gegenstände miteinander fluchten, also in einer Ebene liegen (gleichgerichtet sind).

Der Erfindung liegt die Aufgabe zugrunde, eine Vorrichtung der eingangs genannten Gattung zur Verfügung zu stellen, die das Gleichrichten von länglichen, übereinanderliegenden Gegenständen ausführen kann, ohne dass eine Bedienungsperson eingreifen und ohne dass die Anlage - aus Sicherheitsgründen - stillgesetzt werden muss.

Gelöst wird diese Aufgabe erfindungsgemäß mit einer Vorrichtung, die die Merkmale von Anspruch 1 aufweist.

Bevorzugte und vorteilhafte Weiterbildungen der erfindungsgemäßen Vorrichtung sind Gegenstand der Unteransprüche.

Vorteilhaft bei der erfindungsgemäßen Vorrichtung in allen Ausführungsformen ist es, dass sie bei bestehenden Magazinen, ganz gleich, ob diese mit länglichen Gegenständen (wie Latten) von oben oder von unten her befüllt werden oder ob gleichgerichtete längliche Gegenstände (wie Latten) aus den Magazinen nach oben oder nach unten entnommen werden, verwendet werden kann. Insbesondere kann die erfindungsgemäße Vorrichtung auch nachträglich an bestehende Magazine beliebiger Bauart angebaut werden.

Wenn die länglichen Gegenstände, wie Latten, aus dem Magazin unten entnommen werden, werden die jeweils unten liegenden länglichen Gegenstände gleichgerichtet und nach dem Gleichrichten aus dem Magazin einzeln oder gruppenweise entnommen.

Beispielsweise wird eine der Zahl der Druckstäbe der erfindungsgemäßen Vorrichtung entsprechende Anzahl von länglichen Gegenständen (wie Latten), die in dem Magazin enthalten sind, "gleichgerichtet", indem mehrere Druckstäbe vorgeschoben werden.

Wenn das Magazin, in dem die länglichen Gegenstände übereinanderliegen, so ausgebildet ist wie der Schacht der aus AT 523 386 B1 bekannten Anlage, wird das Magazin von unten her mit Latten beschickt. Die in dem Magazin aufgenommenen und gleichgerichteten länglichen Gegenstände (wie Latten) werden angehoben und ggf. nach oben aus dem Magazin entnommen, sodass von unten her weitere längliche Gegenstände (wie Latten) in das Magazin eingeführt werden können.

Wenn die Erfindung bei einem Magazin für längliche Gegenstände (wie Latten), beispielweise bei einem der Magazine von Holzsortieranlagen, dem längliche Gegenstände von oben zugeführt und nach unten entnommen werden, verwendet wird, werden im Magazin unten liegende und gleichgerichtete längliche Gegenstände (wie Latten) am unteren Ende des Magazins aus dem Magazin entnommen.

Bei der Erfindung ist vorgesehen, dass die Druckstäbe an einem Schlitten relativ zu dem Schlitten verstellbar angeordnet ist.

Dabei ist eine Feder vorgesehen, die jeden Druckstab an seinem freien Ende, das mit einem Druckkopf ausgebildet sein kann, von dem Schlitten weg belastet.

Der Schlitten selbst ist von einem Linearmotor in Richtung der Längserstreckung der länglichen Gegenstände verstellbar und kann zum Gleichrichten an die der Anschlagfläche gegenüberliegenden Enden der gleichzurichtenden Gegenstände angelegt und in Richtung auf die Anschlagfläche hin bewegt werden. Sobald ein länglicher Gegenstand an der Anschlagfläche anliegt und der Schlitten noch weiterbewegt wird, um beispielsweise andere längliche Gegenstände zum Gleichrichten zu verschieben, wird der Druckstab entgegen der Kraft der Feder relativ zum Schlitten verschoben. So sind schließlich alle länglichen Gegenstände, die im Bereich von Druckstäben angeordnet sind, bis in Anlage an der Anschlagfläche verschoben, also gleichgerichtet.

Um die erfindungsgemäße Vorrichtung an unterschiedliche Abmessungen von gleichgerichteten Gegenständen, beispielsweise unterschiedlich dicke Latten, anpassen zu können, können die Druckstäbe an dem Schlitten quer zu der Längserstreckung der Druckstäbe verstellbar angeordnet sein. Alternativ ist es möglich, im Schlitten mehrere Aufnahmen für Druckstäbe vorzusehen, sodass die Lage der Druckstäbe an die Abmessungen der länglichen Gegenstände angepasst gewählt werden kann.

In einer Ausführungsform der Erfindung kann vorgesehen sein, dass der Kopf an den Druckstäben austauschbar befestigt ist.

In einer Ausführungsform der Erfindung kann vorgesehen sein, dass an dem obersten Druckstab eine Leitfläche vorgesehen ist.

In einer Ausführungsform der Erfindung kann vorgesehen sein, dass der die Leitfläche tragende Druckstab als Doppelstab ausgebildet ist.

In einer Ausführungsform der Erfindung kann vorgesehen sein, dass dem Schlitten ein Linearmotor, wie ein elektrischer Stellmotor oder ein Pneumatik- oder Hydraulik-Zylinder, zugeordnet ist.

Weitere Einzelheiten und Merkmale der Erfindung ergeben sich aus der nachstehenden Beschreibung eines bevorzugten Ausführungsbeispiels anhand der Zeichnungen. Es zeigt:
- Fig. 1: einen Stapel aus Latten, die in einem - nicht dargestellten - Magazin angeordnet sind und die Vorrichtung zum Gleichrichten der Latten,
- Fig. 2: in Schrägansicht die Vorrichtung zum Gleichrichten von Latten aus Fig. 1 und
- Fig. 3: die Vorrichtung aus Fig. 1 mit in seine Wirkstellung verschobenem Schlitten.

Da für die Funktion und die Ausführung der erfindungsgemäßen Vorrichtung zum Gleichrichten von länglichen Gegenständen, wie im Ausführungsbeispiel Holzlatten, die Ausgestaltung des Magazins mit dem Schacht, in dem die Gegenstände übereinanderliegend angeordnet sind, nicht wesentlich ist, sind das Magazin und dessen Bestandteile in den Zeichnungen nicht dargestellt, sondern nur die übereinanderliegenden Latten und die erfindungsgemäße Vorrichtung zum Gleichrichten von Latten.

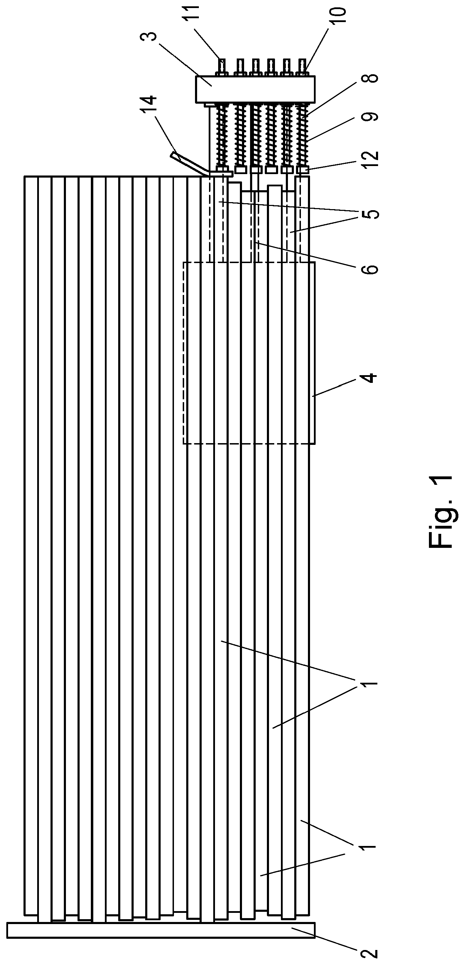

Aus Fig. 1 ist ersichtlich, dass die Latten 1 in dem Magazin unterschiedliche Ausrichtungen einnehmen, sodass beispielsweise deren in Fig. 1 links liegenden Enden nicht bei allen Latten 1 fluchten.

An dem in Fig. 1 linken Rand des Magazins ist eine Anschlagfläche 2 vorgesehen, die gestellfest angeordnet und gegenüber dem Magazin nicht beweglich ist. Die Latten 1 haben auf Grund der Ungenauigkeiten und der Vibrationen beim Befüllen des Magazins und beim Entnehmen länglicher Gegenstände aus dem Magazin von der Anschlagfläche unterschiedlich große Abstände, sind also nicht gleichgerichtet.

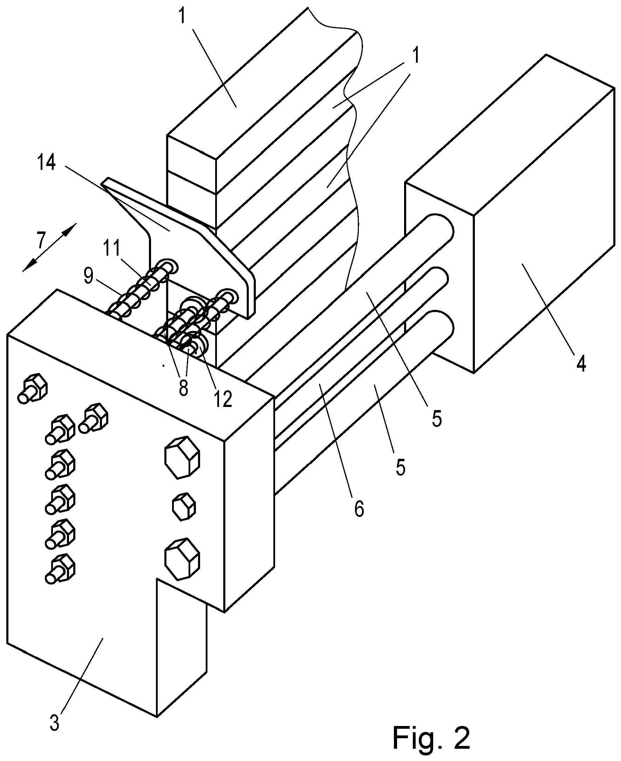

Den gegenüberliegenden - in Fig. 1 rechts liegenden - Enden der Latten 1 ist ein Schlitten 3 zugeordnet. Der Schlitten 3 ist (vgl. Fig. 2) an einer Führung 4 mit Hilfe von Führungsstäben 5 geführt. In der Führung 4 ist weiters ein (nicht dargestellter) Linearmotor, wie ein elektrischer Stellmotor, ein Pneumatik- oder Hydraulikzylinder (doppelwirkend), vorgesehen, dessen Kolbenstange 6 mit dem Schlitten 3 verbunden ist. Durch Betätigen des Linearmotors kann der Schlitten 3 im Sinne des Doppelpfeiles 7 hin und her bewegt werden.

An dem Schlitten 3 sind im gezeigten Ausführungsbeispiel sechs übereinanderliegend angeordnete Druckstäbe 8, 11 vorgesehen. Die Druckstäbe 8 sind an dem Schlitten 3 durch Aufnahme in Bohrungen in ihrer Längsrichtung verschiebbar aufgenommen. Die Druckstäbe 8 werden von über die Druckstäbe 8 gesteckten Druckfedern 9 in die in Fig. 1 gezeigte Ausgangslage belastet. Die Druckfedern 9 sind - vorgespannt - zwischen dem Schlitten 3 und an den Druckstäben 8 vorgesehenen Köpfen 12 angeordnet.

Im gezeigten Ausführungsbeispiel ist der oberste Druckstab als Doppelstab mit zwei Druckstäben 11 ausgebildet. Die Druckstäbe 11 tragen eine Leitfläche 14, die so abgewinkelt ist, dass ihr freies Ende nach oben hin von den Latten 1 zunehmend Abstand aufweist. Die Leitfläche 14 bewirkt, dass von oben eingefüllte Latten 1 nicht auf die Druckstäbe 11 und 8 fallen können, wie dies insbesondere auch die Seitenansicht von Fig. 1 zeigt.

Überdies sind die Druckstäbe 11 länger ausgebildet als die Druckstäbe 8.

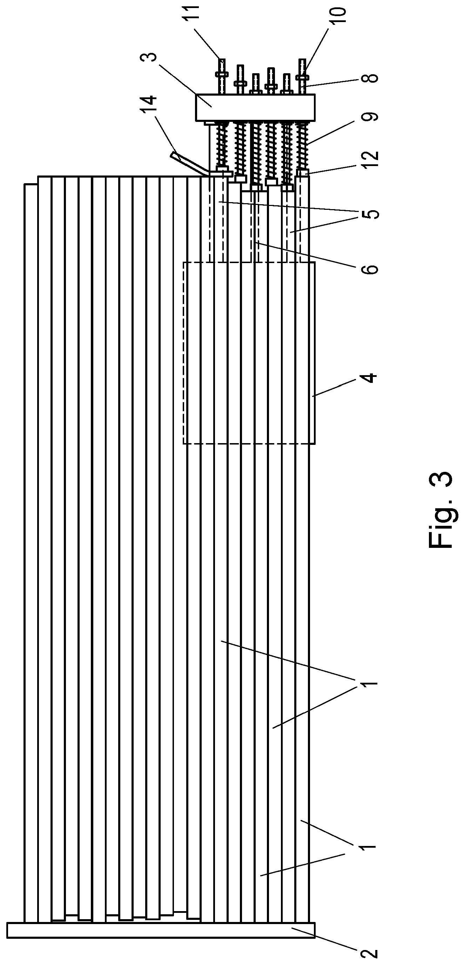

Wenn nun Latten 1 gleichzurichten sind, werden durch Bewegen des Schlittens 3 die an ihm angeordneten Druckstäbe 8 und 11 zu den Latten 1 hin vorgeschoben. Sobald die Köpfe 12 der Druckstäbe 8 an den ihnen zugewandten Enden der Latten 1 anliegen, werden die Latten 1 durch fortgesetztes Bewegen des Schlittens 3 in Richtung auf die Anschlagfläche 2 hin verschoben, bis die der Anschlagfläche 2 zugekehrten Enden der Latten 1 an der Anschlagfläche 2 anliegen. So sind die der Anschlagfläche 2 benachbarten Enden der Latten 1 gleichgerichtet und liegen in einer Ebene, da sie miteinander fluchten. Diese Situation zeigt Fig. 3, in welcher der Schlitten 3 in seiner Wirkstellung mit unterschiedlich weit vorstehenden Druckstäben 8 und 11 zu sehen ist.

Sobald das Gleichrichten ausgeführt worden ist, wird der Schlitten 3 mit den Druckstäben 8 und 11 wieder in die in Fig. 1 gezeigte Ausgangsposition zurückbewegt und die ausgerichteten Latten 1 können aus dem Magazin - im gezeigten Ausführungsbeispiel nach unten hin - entnommen werden.

Bei der erfindungsgemäßen Vorrichtung sind die Druckstäbe 8 in einem Schlitten 3 angeordnet, der in Richtung der Längserstreckung der gleichzurichtenden Gegenstände, wie Latten 1, verschiebbar ist (Pfeil 7 in Fig. 2).

An dem freien Ende der Druckstäbe 8, das von dem Schlitten 3 entfernt angeordnet ist, kann eine Verdickung, wie der Kopf 12, der gegebenenfalls austauschbar ist, befestigt sein.

Damit jeder Druckstab 8 in eine Stellung belastet ist, in welcher er mit seinem freien Ende von dem Schlitten 3 entfernt ist, ist dem Druckstab 8 eine Feder 9, beispielsweise eine über den Druckstab 8 gesteckte Schraubenfeder, zugeordnet.

Wenn der Kopf 12 an den Druckstäben 8 austauschbar angeordnet ist, kann die Größe und Form des auf Latten 1 einwirkenden Endes des Druckstabes 8 an die Querschnittsfläche der gleichzurichtenden länglichen Gegenstände, wie Schnittholz, insbesondere Latten 1 (aus Holz), angepasst werden, indem ein entsprechender Kopf 12 gewählt und an den Druckstäben 8 angebracht wird.

Bei der Erfindung sind mehrere Druckstäbe 8 vorgesehen, die unabhängig voneinander relativ zu dem Schlitten 3 verschiebbar sind. Dies erlaubt es, mehrere übereinanderliegende, längliche Gegenstände, wie Latten 1, gleichzeitig gleichzurichten, indem sie auf die Anschlagfläche 2 hin verschoben werden.

Insbesondere wenn die erfindungsgemäße Vorrichtung mit einem von oben zu beschickenden Magazin kombiniert ist, empfiehlt es sich, an den obersten Druckstäben 11 eine Leitfläche 14 anzubringen. Die Leitfläche 14 ist so ausgerichtet, dass sie von unten nach oben von dem Stapel aus Latten 1 zunehmenden Abstand hat.

Für das Betätigen des Schlittens 3 und damit der Druckstäbe 8 ist ein Linearmotor vorgesehen. Dieser kann ein Elektromotor (Stellmotor) oder ein Pneumatik- oder Hydraulikzylinder (insbesondere doppeltwirkend) sein.

Eine weitere Möglichkeit, die erfindungsgemäße Vorrichtung an die Abmessungen der gleichzurichtenden Gegenstände - Latten 1 - anzupassen, besteht darin, dass die Druckstäbe 8 an dem Schlitten 3 austauschbar angeordnet sind. Dabei ist es möglich, Druckstäbe 8 an dem Schlitten 3 mit gleich großen Abständen anzubringen. Die Druckstäbe 8 können an dem Schlitten so angebracht werden, dass der Abstand der Druckstäbe 8 voneinander an Abmessungen, insbesondere die Stärke, der Gegenstände (Latten 1) angepasst ist.

In einer räumlich günstigen Anordnung kann die Anschlagfläche 2 den Drückstäben 8, die an dem Schlitten 3 angebracht sind, bezüglich der länglichen Gegenstände, wie Schnittholz, insbesondere Latten 1, gegenüberliegend angeordnet sein.

Insbesondere ist es für die erfindungsgemäße Vorrichtung und deren Anwendung vorteilhaft, wenn die Druckstäbe 8 und die Anschlagfläche 2 im Bereich des unteren Endes eines Magazins angeordnet sind. Dabei kann die Anschlagfläche 2 unmittelbar neben einem lotrechten Rand des Magazins angeordnet sein. In diesem Fall ist es bevorzugt, wenn die Druckstäbe 8 neben dem anderen lotrechten Rand des Magazins angeordnet ist.

In einer praktischen, insbesondere für das Nachrüsten bestehender Magazine für längliche Gegenstände, wie Schnittholz oder Latten 1, besonders geeigneten Ausführungsform kann vorgesehen sein, dass der Schlitten 3 über Führungsstäbe 5 in einer neben der Außenseite des Magazins angeordneten Führung 4 in einer Richtung, die parallel zur Längserstreckung der Gegenstände (Latten 1) ist, geführt ist.

Sobald Gegenstände, wie Latten 1, mit Hilfe der erfindungsgemäßen Vorrichtung gleichgerichtet sind, liegt bei in die Wirkstellung verschobenen Druckstäben 8 eine Situation (vgl. Fig. 3) vor, in der die den Druckstäben 8 gegenüberliegenden Enden der Gegenstände gleichgerichtet - **d.h.** miteinander fluchtend - an der Anschlagfläche 2 anliegen. Im Bereich des anderen lotrechten Randes des Magazins sind die Druckstäbe 8 je nach der Länge der länglichen Gegenstände relativ zu dem Schlitten 3 (mit unterschiedlicher Vorspannung der Federn) unterschiedlich weit verschoben.

Zusammenfassend kann ein Ausführungsbeispiel der Erfindung wie folgt beschrieben werden:
Eine Vorrichtung zum Gleichrichten länglicher Gegenstände, wie Latten 1, die in einem Magazin übereinanderliegend angeordnet sind, umfasst einen Schlitten 3 mit mehreren Druckstäben 8. Der Schlitten 3 ist in Richtung der Längserstreckung der länglichen Gegenstände, wie der Latten 1, hin und her verschiebbar, sodass Latten 1 soweit in ihrer Längsrichtung verschoben werden können, bis sie an einer dem Schlitten 3 gegenüberliegend angeordneten Anschlagfläche 2 anliegen. In dieser Stellung sind die der Anschlagfläche 2 benachbarten und an der Anschlagfläche 2 anliegenden Enden der Latten 1 miteinander fluchtend ausgerichtet, sodass die Latten 1 gleichgerichtet sind.

## Patentansprüche

1. Vorrichtung zum Gleichrichten länglicher, übereinander liegender Gegenstände, wie Schnittholz, insbesondere Latten (1), **dadurch gekennzeichnet, dass** zwei oder mehr als zwei übereinander liegende, in Richtung der Längserstreckung der Gegenstände vorschiebbare Druckstäbe (8), die jeweils einem Ende eines der Gegenstände zugeordnet sind, und eine Anschlagfläche (2) vorgesehen sind, die den Druckstäben (8) gegenüberliegend und neben dem anderen Ende der Gegenstände angeordnet ist, dass die Druckstäbe (8) an einem in Richtung der Längserstreckung der Gegenstände verstellbaren Schlitten (3) angebracht sind, wobei die freien, an den Enden der Gegenstände angreifenden Ende der Druckstäbe (8) von dem Schlitten (3) entfernt angeordnet ist, dass die Druckstäbe (8) an dem Schlitten (3) verschiebbar angeordnet sind, dass die Druckstäbe (8) an dem Schlitten (3) voneinander unabhängig verschiebbar angeordnet sind, und dass den Druckstäben (8) eine das freie Ende des Druckstabes (8) von dem Schlitten (3) weg belastende Feder (9) zugeordnet ist.

2. Vorrichtung nach Anspruch 1, **dadurch gekennzeichnet, dass** an dem freien Ende der Druckstäbe (8) eine Verdickung, wie ein Kopf (12), vorgesehen ist.

3. Vorrichtung nach Anspruch 2, **dadurch gekennzeichnet, dass** die Feder (9) eine über den Druckstab (8) gesteckte Schraubenfeder, die zwischen dem Schlitten (3) und der Verdickung des Druckstabes (8) eingespannt ist, ist.

4. Vorrichtung nach einem der Ansprüche 1 bis 3, **dadurch gekennzeichnet, dass** die Druckstäbe (8) an dem Schlitten (3) austauschbar angeordnet sind.

5. Vorrichtung nach einem der Ansprüche 1 bis 4, **dadurch gekennzeichnet, dass** die Druckstäbe (8) an dem Schlitten (3) mit gleich großen Abständen voneinander angebracht sind.

6. Vorrichtung nach einem der Ansprüche 1 bis 5, **dadurch gekennzeichnet, dass** die Lage der Druckstäbe (8) an dem Schlitten (3) und der Abstand der Druckstäbe (8) voneinander an Abmessungen, insbesondere der Stärke, der Gegenstände angepasst ist.

7. Vorrichtung nach einem der Ansprüche 1 bis 6, **dadurch gekennzeichnet, dass** die Druckstäbe (8) und die Anschlagfläche (2) einander gegenüberliegend an einem im Wesentlichen lotrechten Magazin für längliche Gegenstände, wie Schnittholz, insbesondere Latten (1), angeordnet sind.

8. Vorrichtung nach Anspruch 7, **dadurch gekennzeichnet, dass** die Druckstäbe (8) und die Anschlagfläche (2) im Bereich des unteren Endes des Magazins angeordnet sind.

9. Vorrichtung nach Anspruch 7 oder 8, **dadurch gekennzeichnet, dass** die Anschlagfläche (2) unmittelbar neben einem lotrechten Rand des Magazins angeordnet ist.

10. Vorrichtung nach einem der Ansprüche 7 bis 9, **dadurch gekennzeichnet, dass** die Druckstäbe (8) neben einem lotrechten Rand des Magazins angeordnet sind.

11. Vorrichtung nach einem der Ansprüche 7 bis 10, **dadurch gekennzeichnet, dass** der Schlitten (3) über Führungsstäbe (5) in einer neben der Außenseite des Magazins angeordneten Führung (4) in einer Richtung, die parallel zu der Längserstreckung der Gegenstände ist, geführt ist.

12. Vorrichtung nach einem der Ansprüche 1 bis 11, **dadurch gekennzeichnet, dass** an dem obersten Druckstab (11) eine Leitfläche (14) vorgesehen ist und dass die Leitfläche (14) schräg ausgerichtet ist und dass der Abstand der Leitfläche (14) von dem den Druckstäben (8) benachbarten, lotrechten Rand des Magazins nach oben zunimmt.

13. Vorrichtung nach einem der Ansprüche 7 bis 12, **dadurch gekennzeichnet, dass** im Bereich der Druckstäbe (8) liegende Gegenstände bei in die Wirkstellung verschobenen Druckstäben (8) an einem lotrechten Rand des Magazins mit gleichgerichteten Stirnflächen an der Anschlagfläche (2) anliegen und im Bereich des anderen lotrechten Randes des Magazins von den Druckstäben (8), die gegenüber dem Schlitten (3) unter Vorspannen der Federn (9), gegebenenfalls unterschiedlich weit, verschoben sind, belastet sind.

## Claims

1. Device for aligning elongated objects lying one above the other, such as sawn timber, in particular slats (1), **characterized in that** two or more than two pressure rods (8) are provided, which are arranged one above the other, can be moved in the longitudinal extension of the objects and are each assigned to one end of one of the objects, and a stop surface (2) is provided, which is arranged opposite the pressure rods (8) and adjacent to the other end of the objects, **in that** the pressure rods (8) are attached to a carriage (3) that can be adjusted in the direction of the longitudinal extension of the objects, wherein the free ends of the pressure rods (8) that engage the ends of the objects are arranged at a distance from the carriage (3), **in that** the pressure rods (8) are displaceably arranged on the carriage (3), **in that** the pressure rods (8) are arranged on the carriage (3) in such a way that they can be displaced independently of each other, and **in that** the pressure rods (8) are assigned a spring (9) which loads the free end of the pressure rod (8) away from the carriage (3).

2. Device according to claim 1, **characterized in that** a thickening, such as a head (12), is provided at the free end of the pressure rods (8).

3. Device according to claim 2, **characterized in that** the spring (9) is a coil spring placed over the pressure rod (8) and clamped between the carriage (3) and the thickening of the pressure rod (8).

4. Device according to one of claims 1 to 3, **characterized in that** the pressure rods (8) are interchangeably arranged on the carriage (3).

5. Device according to one of claims 1 to 4, **characterized in that** the pressure rods (8) are attached to the carriage (3) at equal distances from each other.

6. Device according to one of claims 1 to 5, **characterized in that** the position of the pressure rods (8) on the carriage (3) and the distance between the pressure rods (8) are adapted to the dimensions, in particular the thickness, of the objects.

7. Device according to one of claims 1 to 6, **characterized in that** the pressure rods (8) and the stop surface (2) are arranged opposite each other on a substantially vertical magazine for elongated objects, such as sawn timber, in particular slats (1).

8. Device according to claim 7, **characterized in that** the pressure rods (8) and the stop surface (2) are arranged in the area of the lower end of the magazine.

9. Device according to claim 7 or 8, **characterized in that** the stop surface (2) is arranged directly adjacent to a vertical edge of the magazine.

10. Device according to one of claims 7 to 9, **characterized in that** the pressure rods (8) are arranged adjacent to a vertical edge of the magazine.

11. Device according to one of claims 7 to 10, **characterized in that** the carriage (3) is guided by guide rods (5) in a guide (4) arranged adjacent to the outside of the magazine in a direction which is parallel to the longitudinal extension of the objects.

12. Device according to one of claims 1 to 11, **characterized in that** a guide surface (14) is provided on the uppermost pressure rod (11) and **in that** the guide surface (14) is oriented in an inclined manner and **in that** the distance of the guide surface (14) from the vertical edge of the magazine adjacent to the pressure rods (8) increases upwards.

13. Device according to one of claims 7 to 12, **characterized in that** objects located in the area of the pressure rods (8) rest against the stop surface (2) with their end faces aligned in the same direction on a vertical edge of the magazine when the pressure rods (8) are moved into the active position, and are loaded by the pressure rods (8) in the area of the other vertical edge of the magazine (8), which are displaced relative to the carriage (3) under the tension of the springs (9), optionally to different degrees.

## Revendications

1. Dispositif pour redresser des objets allongés superposés, tels que du bois coupé, en particulier des lattes (1), **caractérisé en ce que** sont prévues deux ou plus de deux barres de poussée (8) superposées et pouvant avancer dans le sens de la longueur des objets, dont chacune est associée à une extrémité de l'un des objets, et une surface de butée (2) qui est disposée en face des barres de poussée (8) à côté de l'autre extrémité des objets, **en ce que** les barres de poussée (8) sont placées sur un chariot (3) déplaçable dans le sens de la longueur des objets, l'extrémité libre des barres de poussée (8) qui se met en prise sur les extrémités des objets étant disposée loin du chariot (3), en que les barres de poussée (8) sont disposées sur le chariot (3) avec possibilité de translation, **en ce que** les barres de poussée (8) sont disposées sur le chariot (3) avec possibilité de translation indépendamment les unes des autres, et **en ce qu'**un ressort (9) contraignant l'extrémité libre de la barre de poussée (8) à s'écarter du chariot (3) est associé aux barres de poussée (8).

2. Dispositif selon la revendication 1, **caractérisé en ce qu'**un épaississement tel qu'une tête (12) est prévu à l'extrémité libre des barres de poussée (8).

3. Dispositif selon la revendication 2, **caractérisé en ce que** le ressort (9) est un ressort à boudin enfilé par-dessus la barre de poussée (8), qui est tendu entre le chariot (3) et l'épaississement de la barre de poussée (8).

4. Dispositif selon l'une des revendications 1 à 3, **caractérisé en ce que** les barres de poussée (8) sont disposées sur le chariot (3) de façon échangeable.

5. Dispositif selon l'une des revendications 1 à 4, **caractérisé en ce que** les barres de poussée (8) sont disposées sur le chariot (3) à une distance égale les unes des autres.

6. Dispositif selon l'une des revendications 1 à 5, **caractérisé en ce que** la position des barres de poussée (8) sur le chariot (3) et la distance entre les barres de poussée (8) sont adaptées à des dimensions, en particulier à l'épaisseur, des objets.

7. Dispositif selon l'une des revendications 1 à 6, **caractérisé en ce que** les barres de poussée (8) et la surface de butée (2) sont disposées les unes en face de l'autre dans un magasin sensiblement vertical pour des objets allongés tels que du bois coupé, en particulier des lattes (1).

8. Dispositif selon la revendication 7, **caractérisé en ce que** les barres de poussée (8) et la surface de butée (2) sont disposées au niveau de l'extrémité inférieure du magasin.

9. Dispositif selon la revendication 7 ou 8, **caractérisé en ce que** la surface de butée (2) est disposée immédiatement à côté d'un bord vertical du magasin.

10. Dispositif selon l'une des revendications 7 à 9, **caractérisé en ce que** les barres de poussée (8) sont disposées à côté d'un bord vertical du magasin.

11. Dispositif selon l'une des revendications 7 à 10, **caractérisé en ce que** le chariot (3) est guidé sur des barres de guidage (5) dans une direction parallèle à la longueur des objets dans un guide (4) disposé à côté de la face extérieure du magasin.

12. Dispositif selon l'une des revendications 1 à 11, **caractérisé en ce qu'**une surface de guidage (14) est prévue sur la barre de poussée du haut (11) et **en ce que** la surface de guidage (14) est orientée à l'oblique et **en ce que** la distance entre la surface de guidage (14) et le bord vertical du magasin voisin des barres de poussée (8) augmente vers le haut.

13. Dispositif selon l'une des revendications 7 à 12, **caractérisé en ce que**, lorsque les barres de poussée (8) sont déplacées dans la position d'action, des objets situés au niveau des barres de poussée (8) reposent sur un bord vertical du magasin avec des faces d'extrémité orientées dans la même direction sur la surface de butée (2) et sont contraints au niveau de l'autre bord vertical du magasin par les barres de poussée (8) qui sont déplacées par rapport au chariot (3) avec la précontrainte des ressorts (9), éventuellement sur une distance différente.
